# EUROPÄISCHE PATENTSCHRIFT

(11) **EP 2 050 639 B1**
(45) Veröffentlichungstag und Bekanntmachung des Hinweises auf die Patenterteilung: **18.05.2011**
(21) Anmeldenummer: 09000488.8
(22) Anmeldetag: 28.02.2006
(51) Int. Cl.: B60T 17/22, B60T 8/32

(54) **Steuereinrichtung eines Schienenfahrzeugs**
Control device for a rail vehicle
Dispositif de réglage pour véhicule ferroviaire

(30) Priorität: 02.03.2005 DE 102005010118
(43) Veröffentlichungstag der Anmeldung: 22.04.2009
(62) Teilanmeldung aus: 06707318.9
(73) Patentinhaber: KNORR-BREMSE Systeme für Schienenfahrzeuge GmbH, 80809 München (DE)
(72) Erfinder: Aurich, Stefan, 86316 Friedberg (DE); Friesen, Ulf, 85579 Neubiberg (DE); Wach, Jörg-Johannnes, Dr., 81247 München (DE); Schuhmacher, Johannes, Dipl.-Ing., 81373 München (DE)

(56) Entgegenhaltungen:
- EP-A- 0 794 102
- DE-A1- 10 146 093
- DE-A1- 10 332 034
- DE-U1- 9 321 190
- DE-U1- 20 220 772

## Beschreibung

### Stand der Technik

Die Erfindung geht aus von einer Steuereinrichtung eines Schienenfahrzeugs gemäß den Oberbegriffen der Patentansprüche 1 und 4. Eine solche Steuereinrichtung ist aus der DE 103 32 034 A1 bekannt.

Gleitschutzeinrichtungen sind nach UIC-Blatt 541-05 für alle Schienenfahrzeuge mit Hochleistungsbremsen der Gattung R vorgeschrieben, wobei jedes Drehgestell getrennt überwacht werden soll. Mittels solcher Gleitschutzeinrichtungen soll das Blockieren der Radsätze beim Bremsen verhindert und ein optimales Ausnutzen des zur Verfügung stehenden Kraftschlusses zwischen Rad und Schiene erzielt werden. Dadurch können Flachstellen an den Rädern vermieden und die Bremswege verkürzt werden. Dazu werden die Drehgeschwindigkeiten aller Achsen einer Fahrzeugeinheit über Drehzahlgeber erfasst. Hieraus berechnet ein Mikroprozessor des elektronischen Gleitschutzsteuergeräts die tatsächliche Fahrzeug- oder Zuggeschwindigkeit und reduziert den durch die Bremssteuerung vorgegebenen Bremszylinderdruck mittels elektropneumatischer Gleitschutzventile achs- oder drehgestellweise. Solche elektronischen Gleitschutzsteuergeräte sind üblicherweise in jedem Reisezugwagen vorhanden.

Für Fahrzeuge mit einer Höchstgeschwindigkeit von über 200 km/h schreibt die UIC 541-05 neben einer Gleitschutzeinrichtung zusätzlich eine Rollüberwachungseinrichtung vor, welche Drehstörungen von Rädern bzw. das Nichtdrehen von Rädern erfasst und ein entsprechendes Meldesignal aussteuert. Solche Rollüberwachungseinrichtungen umfassen Drehzahlgeber, welche die Drehgeschwindigkeiten der Räder einer Fahrzeugeinheit erfassen und entsprechende Signale ein Rollüberwachungssteuergerät aussteuern.

Weiterhin gewinnen heutzutage im Schienenfahrzeugverkehr Fahrwerksüberwachungseinrichtungen immer mehr an Bedeutung. Aus Sicherheitsgründen werden diese Überwachungssysteme in Richtlinien genormt. Beispiele hierfür sind die folgenden Systeme, die aufgrund der Technischen Spezifikationen für die Interoperabilität (TSI) vom Amtsblatt der Europäischen Gemeinschaft für Hochgeschwindigkeitszüge gefordert werden :
- On-Board-Systeme zur Entgleisungsdetektion,
- On-Board-Systeme zur Heißläuferdetektion bzw. zur Lagerschadenerkennung,
- On-Board-Systeme zur Erkennung von instabilem Lauf bzw. von defekten Dämpfern.

Solche Fahrwerksüberwachungseinrichtungen befinden sich bereits in der Anwendung. So wird z.B. im aktuellen ICE ein System zur Erkennung von instabilem Lauf eingesetzt und in neueren automatisch fahrenden Untergrundbahnen kommt ein System zur Entgleisungsdetektion zur Anwendung. Diesen Systemen ist gemeinsam, dass sie funktional als stand-alone-Systeme aufgebaut sind und für sich alleine wirken.

Die Problematik dieser Fahrwerksüberwachungseinrichtungen als separat aufgebaute Systeme (stand-alone-Lösung) besteht in dem relativ hohen Aufwand und Kosten ihrer Realisierung. Denn der Einbau eines solchen Systems erfordert zusätzliche Baugruppen, Sensoren, Verkabelung und Bauraum. Außerdem wird die Komplexität der technischen Ausrüstung erhöht, was sich negativ auf die Zuverlässigkeit auswirkt.

Die DE 202 20 772 U1 offenbart ein elektronisches Steuergerät mit einem Gehäuse zur Aufnahme von Steckbaugruppen wie beispielsweise Steuerrechner-Baugruppen oder I/O-Baugruppen.

Der Erfindung liegt demgegenüber die Aufgabe zugrunde, eine Steuereinrichtung der eingangs erwähnten Art derart weiter zu bilden, dass die oben genannten Nachteile vermieden werden.

Erfindungsgemäß wird diese Aufgabe durch die Merkmale der Patentansprüche 1 und 4 gelöst.

### Offenbarung der Erfindung

Gemäß eines ersten Aspekts der Erfindung ist das elektronische Fahrwerksüberwachungssteuergerät mit dem elektronischen Gleitschutzsteuergerät zu einer baulichen Einheit zusammengefasst, wobei die Fahrwerksüberwachungseinrichtung und die Gleitschutzeinrichtung wenigstens eine gemeinsame Stromversorgung und eine gemeinsame Schnittstelle zur Kommunikation mit einer Bedienperson und eine gemeinsame Schnittstelle zur Kommunikation mit einem Fahrzeugleitsystem aufweisen und der Gleitschutzsensor ein Kombinationssensor ist, welcher außer dem Signal für die Drehgeschwindigkeit wenigstens eines Rades oder einer Achse ein Signal für die Temperatur eines Radsatzlagers und ein Schwingungssignal für am Radsatzlager herrschende Schwingungen an das Fahrwerküberwachungssteuergerät aussteuert, um die Drehgeschwindigkeits-, Temperatur- und Beschleunigungssignale des Kombinationssensors zusätzlich als Diagnosedaten zur frühzeitigen Erkennung defekter Bauteile oder Streckenabschnitte der Schienen heranzuziehen.

Gemäß eines weiteren Aspekts der Erfindung ist das elektronische Fahrwerksüberwachungssteuergerät mit dem elektronischen Rollüberwachungssteuergerät zu einer baulichen Einheit zusammengefasst, wobei die Fahrwerksüberwachungseinrichtung und die Rollüberwachungseinrichtung wenigstens eine gemeinsame Stromversorgung und eine gemeinsame Schnittstelle zur Kommunikation mit einer Bedienperson und eine gemeinsame Schnittstelle zur Kommunikation mit einem Fahrzeugleitsystem aufweisen und der Rollüberwachungssensor ein Kombinationssensor ist, welcher außer einem Signal für die Drehgeschwindigkeit wenigstens eines Rades oder einer Achse ein Signal für die Temperatur eines Radsatzlagers und ein Schwingungssignal für die am Radsatzlager herrschende Schwingungen an das Fahrwerküberwachungssteuergerät aussteuert, um die Drehgeschwindigkeits-, Temperatur- und Beschleunigungssignale des Kombinationssensors als Diagnosedaten zur frühzeitigen Erkennung defekter Bauteile oder Streckenabschnitte der Schienen heranzuziehen.

Das Fahrwerksüberwachungssteuergerät benötigt insbesondere die Drehgeschwindigkeitssignale der Radachsen oder der Räder, um die Überwachungsfunktion auszuführen. Diese Signale können mit geringem Aufwand intern weitergeleitet werden, wenn das Fahrwerksüberwachungssteuergerät mit dem Gleitschutzsteuergerät oder mit dem Rollüberwachungssteuergerät zu einer Baueinheit zusammengefasst bzw. in integrierter Bauweise vorhanden ist. Darüber hinaus stehen diverse Zustandssignale über das aktuelle Brems- und Fahrverhalten den im Überwachungssteuergerät implementierten Überwachungsalgorithmen direkt zur Verfügung und ermöglichen eine effektivere Diagnose.

Die bauliche Einheit bietet weiterhin die Möglichkeit, bestimmte Systemkomponenten gemeinsam zu nutzen, beispielsweise eine gemeinsame Stromversorgung, eine gemeinsame Schnittstelle zur Kommunikation mit einer Bedienperson und eine gemeinsame Schnittstelle zur Kommunikation mit dem Fahrzeugleitsystem. Dies reduziert den gerätetechnischen Aufwand. Bei Anwendung einer leistungsfähigeren Rechnereinheit ist auch das parallele Verarbeiten von Gleitschutz-, Rollüberwachungs- und Fahrwerksüberwachungsalgorithmen denkbar. Infolgedessen werden Baugruppen von verschiedenen Einrichtungen kostengünstig gemeinsam genutzt. Die gemeinsame Schnittstelle zur Kommunikation mit dem Fahrzeugleitsystem ist insbesondere an einen Fahrzeugbus angeschlossen, um beispielsweise kritische Zustände, welche von der Fahrwerksüberwachungseinrichtung detektiert wurden, an eine Anzeigeeinrichtung zu melden.

Nicht zuletzt kann der Einsatz der Fahrwerksüberwachungseinrichtung zur Diagnose und Früherkennung von schadhaften Bauteilen, kritischen Zuständen bzw. sonstigen Fehlern, wie beispielsweise die Erkennung von Flachstellen an Rädern oder die Früherkennung von Lagerschäden eine frühzeitige und zustandsorientierte Wartung ermöglichen. Ziel sind dabei geringere Stillstandszeiten, eine bessere Ausnutzung von Bauteilen und damit die Einsparung von Kosten.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist der Kombinationssensor vorzugsweise direkt am zu überwachenden Radsatzlager oder in der unmittelbaren Nähe des Radsatzlagers angeordnet.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: eine schematische Darstellung einer Gleitschutzeinrichtung eines Reisezugwagens gemäß einer bevorzugten Ausführungsform;
- Fig.2: eine schematische Querschnittsdarstellung eines in der Gleitschutzeinrichtung verwendeten Kombinationssensors von Fig.1;

### Beschreibung des Ausführungsbeispiels

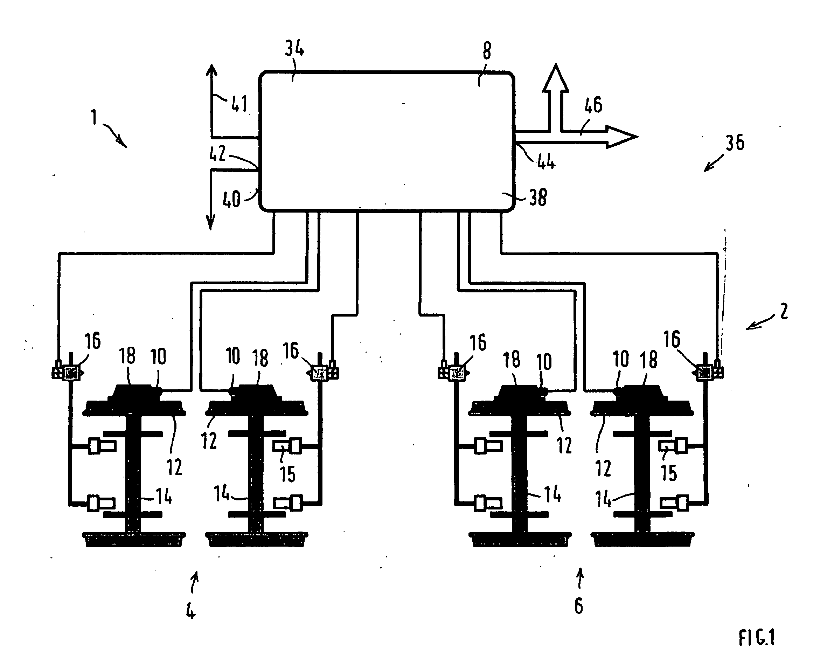

In Fig.1 ist schematisch der Aufbau einer Gleitschutzeinrichtung 1 eines Reisezugwagens 2 mit zwei zweiachsigen Drehgestellen 4, 6 dargestellt, welcher beispielsweise für eine Geschwindigkeit bis zu 200 km/h ausgelegt ist.

Die Gleitschutzeinrichtung 1 verfügt über ein elektronisches Gleitschutzsteuergerät 8 sowie über Sensoren 10 an beispielsweise jedem Rad 12 einer Achse 14 eines Drehgestells 4, 6, durch welche die momentane Drehgeschwindigkeit der jeweiligen Achse bzw. des jeweiligen Rades detektierbar ist. In Fig.1 ist aus Übersichtlichkeitsgründen jedoch nur an jeweils einer Achsseite ein solcher Sensor 10 dargestellt. In bekannter Weise berechnet ein Mikroprozessor des elektronischen Gleitschutzsteuergeräts 8 die tatsächliche Fahrzeug- oder Zuggeschwindigkeit und reduziert den durch die in einem nicht dargestellten Führerfahrzeug angeordnete Bremssteuereinrichtung vorgegebenen Bremszylinderdruck im Bremszylinder 15 mittels elektropneumatischer Gleitschutzventile 16 achsweise. Die Achsen 14 sind über jeweils zwei radnahe Radsatzlager 18 am jeweiligen Drehgestell 4, 6 drehbar gehalten, wobei von den Radsatzlagern 18 in Fig.1 jedoch nur jeweils eines je Achse 14 gezeichnet ist.

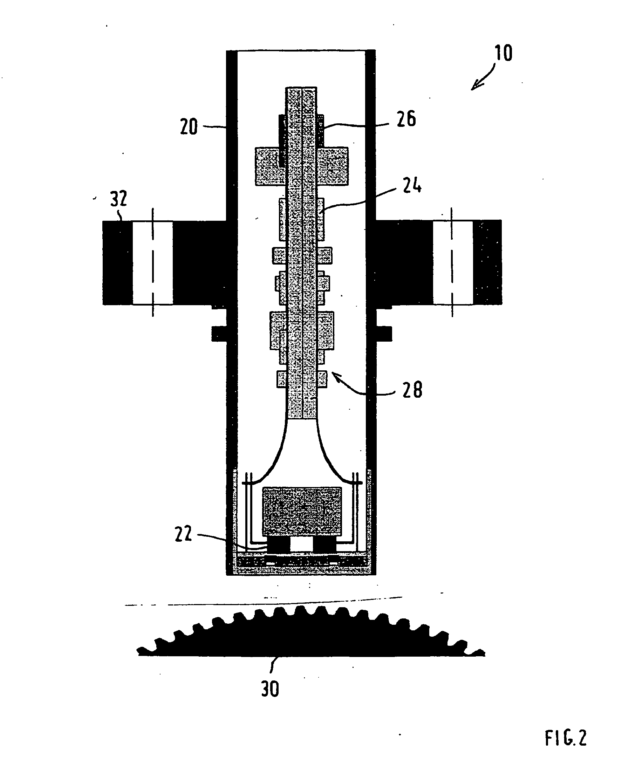

Je einem Radsatzlager 18 einer Achse 14 ist ein in Fig.2 explizit dargestellter Kombinationssensor 10 zugeordnet, mit welchem die momentane Drehgeschwindigkeit der zugeordneten Achse 14 bzw. des zugeordneten Rades 12, die momentane Temperatur des betreffenden Radsatzlagers 18 sowie wenigstens eine Längsbeschleunigung des betreffenden Radsatzlagers 18 messbar ist.

Gemäß einer besonders bevorzugten Ausführungsform sind in einem sich quer zur Radachse erstreckenden Gehäuse 20 des Kombinationssensors 10 ein Hallsensor 22, ein Temperatursensor 24, ein Beschleunigungssensor 26 sowie eine Auswerteelektronik 28 zur Bildung und Aussteuerung eines Drehgeschwindigkeits-, eines Temperatur- und wenigstens eines Beschleunigungssignals. Dem Hallsensor 22 liegt ein mit der jeweiligen Achse 14 bzw. mit dem jeweiligen Rad 12 mitdrehendes Polrad 30 gegenüber, durch dessen Drehung ein Signal für die momentane Drehgeschwindigkeitssignal der jeweiligen Achse 14 bzw. des jeweiligen Rades 12 erzeugt wird. Das Gehäuse 20 weist vorzugsweise einen Außenflansch 32 auf, über welchen der Kombinationssensor 10 unmittelbar an dem betreffenden Radsatzlager 18 lösbar befestigt werden kann. Dadurch wird der auf das Radsatzlager 18 einwirkende Körperschall, welcher beispielsweise von Abflachungen an einem Rad 12 der Achse 14 oder einem defekten Radsatzlager 18 herrührt, auf das Gehäuse 20 des Kombinationssensors 10 übertragen und kann dann vom Beschleunigungssensor 26 detektiert werden. Dieser ist vorzugsweise zur Messungen von Längsschwingungen in allen drei Raumachsen ausgebildet, es sind aber auch weniger Messrichtungen darstellbar. Auf demselben Wege wird die in dem betreffenden Radsatzlager 18 herrschende Temperatur auf den Temperatursensor 24 übertragen.

Diese Signale werden von der Auswerteelektronik 28 unter anderem an ein Fahrwerksüberwachungssteuergerät 34 einer Fahrwerksüberwachungseinrichtung 36 ausgesteuert, welches folgende Überwachungsfunktionen ausführen kann :
- Warm- und Heißläuferdetektion des jeweiligen Radsatzlagers 18 durch Temperaturüberwachung des Radsatzlagers 18;
- Lagerschadenerkennung des jeweiligen Radsatzlagers 18 durch entsprechende Schwingungssignale;
- Erkennung von instabilem Lauf bzw. von defekten Dämpfern im Fahrwerk durch entsprechende Schwingungssignale;
- Entgleisungsdetektion;
- Detektion von Flachstellen und unrunden Rädern 12 durch entsprechende Schwingungssignale.

Die Funktionen Entgleisungsdetektion, Heißläufererkennung sowie Detektion von instabilem Laufverhalten sind Forderungen bzw. Empfehlungen der TSI für Hochgeschwindigkeitszüge. Die Temperatur-, Drehgeschwindigkeits- und Beschleunigungssignale der Kombinationssensoren 10 können zusätzlich als Diagnosedaten zur frühzeitigen Erkennung defekter Bauteile oder Streckenabschnitte der Schienen herangezogen werden.

Das Fahrwerksüberwachungssteuergerät 34 ist mit dem Gleitschutzsteuergerät 8 in einer Baueinheit 38 zusammengefasst. Dies kann beispielsweise dadurch realisiert sein, dass ein Gehäuse des elektronischen Fahrwerksüberwachungssteuergeräts 34 und ein Gehäuse des elektronischen Gleitschutzsteuergeräts 8 aneinandergeflanscht sind. Bevorzugt sind jedoch das elektronische Fahrwerksüberwachungssteuergerät 34 und das elektronische Gleitschutzsteuergerät 8 in einem gemeinsamen Gehäuse 40 untergebracht.

Die Fahrwerksüberwachungseinrichtung 36 und die Gleitschutzeinrichtung 1 können wenigstens eine gemeinsame Stromversorgung 41, eine gemeinsame Schnittstelle 42 zur Kommunikation mit einer Bedienperson und eine gemeinsame Schnittstelle 44 zur Kommunikation mit einem Fahrzeugleitsystem aufweisen. Die gemeinsame Schnittstelle 44 zur Kommunikation mit dem Fahrzeugleitsystem ist insbesondere an einen Fahrzeugbus 46 angeschlossen, um beispielsweise kritische Zustände, welche die Fahrwerksüberwachungseinrichtung 36 detektiert hat, an eine Anzeigeeinrichtung zu melden.

Falls das betreffende Schienenfahrzeug kein Reisezugwagen 2, sondern das Führerfahrzeug des Schienenfahrzeugverbandes ist, ist in diesem ein zentrales elektronisches Bremssteuergerät der Bremssteuereinrichtung vorhanden, welches die Bremsvorgänge des gesamten Schienenfahrzeugverbandes steuert und regelt.

Falls ein Reisezugwagen oder ein Führerfahrzeug für Geschwindigkeiten über 200 km/h ausgelegt ist, ist neben der Gleitschutzeinrichtung 1 zusätzlich eine Rollüberwachungseinrichtung mit einem elektronischen Rollüberwachungsteuergerät vorhanden, welches die Drehzahlsignale des Kombinationssensors 10 empfängt und daraus ermittelt, ob Roll- oder Drehstörungen der Räder des Schienenfahrzeugs vorliegen.

Je nach Ausstattung und Art des Schienenfahrzeugs soll dann das elektronische Fahrwerksüberwachungssteuergerät mit dem elektronischen Gleitschutzsteuergerät und/oder mit dem elektronischen Bremssteuergerät und/oder mit dem Rollüberwachungssteuergerät zu einer baulichen Einheit zusammengefasst sein.

**Bezugszahlenliste**
- 1: Gleitschutzeinrichtung
- 2: Reisezugwagen
- 4: Drehgestell
- 6: Drehgestell
- 8: Gleitschutzsteuergerät
- 10: Kombinationssensor
- 12: Rad
- 14: Achse
- 15: Bremszylinder
- 16: Gleitschutzventil
- 18: Radsatzlager
- 20: Gehäuse
- 22: Hallsensor
- 24: Temperatursensor
- 26: Beschleunigungssensor
- 28: Auswerteelektronik
- 30: Polrad
- 32: Außenflansch
- 34: Fahrwerksüberwachungssteuergerät
- 36: Fahrwerksüberwachungseinrichtung
- 38: Baueinheit
- 40: Gehäuse
- 41: Stromversorgung
- 42: Schnittstelle
- 44: Schnittstelle
- 46: Fahrzeugbus

## Patentansprüche

1. Steuereinrichtung eines Schienenfahrzeugs (2) mit einer Gleitschutzeinrichtung (1), welche in Abhängigkeit wenigstens eines von einem Gleitschutzsensor (10) an ein elektronisches Gleitschutzsteuergerät (8) gelieferten Drehgeschwindigkeitssignals den Radschlupf der Räder (12) wenigstens einer Achse (14) regelt und mit einer Fahrwerksüberwachungseinrichtung (36) zur Überwachung und/oder zur Diagnose des Fahrwerks im Hinblick auf kritische Zustände und Schäden wie beispielsweise Entgleisung, heißgelaufene Lager, instabiler Lauf und ähnliches, umfassend ein elektronisches Fahrwerksüberwachungssteuergerät (34), **dadurch gekennzeichnet, dass**
a) das elektronische Fahrvverksüberwachungssteuergerät (34) mit dem elektronischen Gleitschutzsteuergerät (8) zu einer baulichen Einheit (38) zusammengefasst ist, wobei
b) die Fahrwerksüberwachungseinrichtung (36) und die Gleitschutzeinrichtung (1) wenigstens eine gemeinsame Stromversorgung (41) und eine gemeinsame Schnittstelle (42) zur Kommunikation mit einer Bedienperson und eine gemeinsame Schnittstelle (44) zur Kommunikation mit einem Fahrzeugleitsystem aufweisen, und wobei
c) der Gleitschutzsensor ein Kombinationssensor (10) ist, welcher außer dem Signal für die Drehgeschwindigkeit wenigstens eines Rades oder einer Achse ein Signal für die Temperatur eines Radsatzlagers (18) und ein Schwingungssignal für am Radsatzlager (18) herrschende Schwingungen an das Fahrwerküberwachungssteuergerät (34) aussteuert, um die Drehgeschwindigkeits-, Temperatur- und Beschleunigungssignale des Kombinationssensors (10) zusätzlich als Diagnosedaten zur frühzeitigen Erkennung defekter Bauteile oder Streckenabschnitte der Schienen heranzuziehen.

2. Steuereinrichtung nach Anspruch 1, **dadurch gekennzeichnet, dass** ein Gehäuse des elektronischen Fahrwerksüberwachungssteuergeräts und ein Gehäuse des elektronischen Gleitschutzsteuergeräts aneinandergeflanscht sind.

3. Steuereinrichtung nach Anspruch 1, **dadurch gekennzeichnet, dass** zumindest ein Teil des elektronischen Fahrwerksüberwachungssteuergeräts (34) und des elektronischen Gleitschutzsteuergeräts (8) in einem gemeinsamen Gehäuse (40) untergebracht sind.

4. Steuereinrichtung eines Schienenfahrzeugs (2) mit einer Rollüberwachungseinrichtung umfassend ein elektronisches Rollüberwachungssteuergerät und wenigstens einen Rollüberwachungssensor (10) zum Erfassen der Drehgeschwindigkeit wenigstens eines der Räder in Form eines Drehgeschwindigkeitssignals, sowie mit einer Fahrwerksüberwachungseinrichtung (36) zur Überwachung und/oder zur Diagnose des Fahrwerks im Hinblick auf kritische Zustände und Schäden wie beispielsweise Entgleisung, heißgelaufene Lager, instabiler Lauf und ähnliches, umfassend ein elektronisches Fahrwerksüberwachungssteuergerät (34), **dadurch gekennzeichnet, dass**
a) das elektronische Fahrwerksüberwachungssteuergerät (34) mit dem elektronischen Rollüberwachungssteuergerät zu einer baulichen Einheit (38) zusammengefasst ist, wobei
b) die Fahrwerksüberwachungseinrichtung (36) und die Rollüberwachungseinrichtung wenigstens eine gemeinsame Stromversorgung (41) und eine gemeinsame Schnittstelle (42) zur Kommunikation mit einer Bedienperson und eine gemeinsame Schnittstelle (44) zur Kommunikation mit einem Fahrzeugleitsystem aufweisen, und wobei
c) der Rollüberwachungssensor ein Kombinationssensor (10) ist, welcher außer einem Signal für die Drehgeschwindigkeit wenigstens eines Rades oder einer Achse ein Signal für die Temperatur eines Radsatzlagers (18) und ein Schwingungssignal für die am Radsatzlager (18) herrschende Schwingungen an das Fahrwerküberwachungssteuergerät (34) aussteuert, um die Drehgeschwindigkeits-, Temperatur- und Beschleunigungssignale des Kombinationssensors (10) als Diagnosedaten zur frühzeitigen Erkennung defekter Bauteile oder Streckenabschnitte der Schienen heranzuziehen.

5. Steuereinrichtung nach Anspruch 4, **dadurch gekennzeichnet, dass** ein Gehäuse des elektronischen Fahrwerksüberwachungssteuergeräts und ein Gehäuse des Rollüberwachungssteuergeräts aneinandergeflanscht sind.

6. Steuereinrichtung nach Anspruch 4, **dadurch gekennzeichnet, dass** zumindest ein Teil des elektronischen Fahrwerksüberwachungssteuergeräts (34) und des Rollüberwachungssteuergeräts in einem gemeinsamen Gehäuse (40) untergebracht sind.

7. Steuereinrichtung nach einem der vorhergehenden Ansprüche, **dadurch gekennzeichnet, dass** der Kombinationssensor (10) direkt am Radsatzlager (18) oder in unmittelbarer Nähe des Radsatzlagers (18) angeordnet ist.

8. Steuereinrichtung nach einem der vorhergehenden Ansprüche, **dadurch gekennzeichnet, dass** das Fahrwerksüberwachungssteuergerät (34) das Drehgeschwindigkeitssignal des Rollüberwachungssensors (10) und/oder des Gleitschutzsensors (10) auswertet.

9. Steuereinrichtung nach einem der vorhergehenden Ansprüche, **dadurch gekennzeichnet, dass** die gemeinsame Schnittstelle (44) zur Kommunikation mit einem Fahrzeugleitsystem an einen Fahrzeugbus (46) angeschlossen ist.

10. Steuereinrichtung nach Anspruch 9, **dadurch gekennzeichnet, dass** das Fahrzeugleitsystem eine Anzeigeeinrichtung zur Meldung von kritischen Zuständen aufweist, welche die Fahrwerksüberwachungseinrichtung (38) detektiert hat.

11. Schienenfahrzeug, beinhaltend eine Steuereinrichtung nach wenigstens einem der vorhergehenden Ansprüche.

## Claims

1. Control device of a rail vehicle (2) with an anti-skid device (1) which controls the wheel slip of the wheels (12) of at least one axle (14) as a function of at least one rotational speed signal supplied to an electronic anti-skid control unit (8) by an anti-skid sensor (10) and with a rolling gear monitoring device (36) for monitoring and/or for diagnosing the rolling gear with respect to critical states and damage such as, for example, derailment, overheated bearings, unstable running and the like, comprising an electronic rolling gear monitoring control unit (34), **characterised in that**
a) the electronic rolling gear monitoring control unit (34) is combined with the electronic anti-skid control unit (8) to form one structural unit (38), wherein
b) the rolling gear monitoring device (36) and the anti-skid device (1) have at least one common power supply (41) and one common interface (42) for communicating with an operator and one common interface (44) for communicating with a vehicle control system, and wherein
c) the anti-skid sensor is a combination sensor (10) which, apart from the signal for the rotational speed of at least one wheel or axle, modulates a signal for the temperature of a wheel set bearing (18) and an oscillation signal for oscillations occurring at the wheel set bearing (18) to the - rolling gear monitoring control unit (34), in order to include the rotational speed, temperature and acceleration signals of the combination sensor (10) as additional diagnostic data for the early detection of faulty components or rail sections.

2. Control device according to claim 1, **characterised in that** a housing of the electronic rolling gear monitoring control unit and a housing of the electronic anti-skid control unit are connected to one another by flanges.

3. Control device according to claim 1, **characterised in that** at least part of the electronic rolling gear monitoring control unit (34) and of the electronic anti-skid control unit (8) are accommodated in a common housing (40).

4. Control device of a rail vehicle (2) with a roll monitoring device comprising an electronic roll monitoring control unit and at least one roll monitoring sensor (10) for sensing the rotational speed of at least one of the wheels in the form of a rotational speed signal, and with a rolling gear monitoring device (36) for monitoring and/or for diagnosing the rolling gear with respect to critical states and damage such as, for example, derailment, overheated bearings, unstable running and the like, comprising an electronic rolling gear monitoring control unit (34), **characterised in that**
a) the electronic rolling gear monitoring control unit (34) is combined with the electronic roll monitoring control unit to form one structural unit (38), wherein
b) the rolling gear monitoring device (36) and the roll monitoring device have at least one common power supply (41) and one common interface (42) for communicating with an operator and one common interface (44) for communicating with a vehicle control system, and wherein
c) the roll monitoring sensor is a combination sensor (10) which, apart from the signal for the rotational speed of at least one wheel or axle, modulates a signal for the temperature of a wheel set bearing (18) and an oscillation signal for oscillations occurring at the wheel set bearing (18) to the rolling gear monitoring control unit (34), in order to include the rotational speed, temperature and acceleration signals of the combination sensor (10) as diagnostic data for the early detection of components or rail sections.

5. Control device according to claim 4, **characterised in that** a housing of the electronic rolling gear monitoring control unit and a housing of the roll monitoring control unit are connected to one another by flanges.

6. Control device according to claim 4, **characterised in that** at least part of the electronic rolling gear monitoring control unit (34) and of the roll monitoring control unit are accommodated in a common housing (40).

7. Control device according to any of the preceding claims, **characterised in that** the combination sensor (10) is arranged directly on the wheel set bearing (18) or in the immediate vicinity of the wheel set bearing (18).

8. Control device according to any of the preceding claims, **characterised in that** the rolling gear monitoring control unit (34) evaluates the rotational speed signal of the roll monitoring sensor (10) and/or of the anti-skid sensor (10).

9. Control device according to any of the preceding claims, **characterised in that** the common interface (44) for communicating with a vehicle control system is connected to a vehicle bus (46).

10. Control device according to claim 9, **characterised in that** the vehicle control system comprises a display device for signalling critical states which the rolling gear monitoring device (38) has detected.

11. Rail vehicle including a control device according to at least one of the preceding claims.

## Revendications

1. Dispositif de commande d'un véhicule (2) ferroviaire, comprenant un dispositif (1) d'anti-enrayage, qui, en fonction d'au moins un signal de vitesse de rotation fourni par un capteur (10) d'anti-enrayage à un appareil (8) électronique de commande d'anti-enrayage, règle le glissement des roues (12) d'au moins un essieu (14) et comprenant un dispositif (36) de contrôle du châssis pour le contrôle et/ou pour le diagnostic du châssis en ce qui concerne des états critiques et des dommages, comme, par exemple le dégivrage, des paliers grippés, une marche instable et analogue, comprenant un appareil (34) électronique de commande de contrôle de châssis, **caractérisé en ce que**
a) l'appareil (34) électronique de commande de contrôle de châssis est rassemblé avec l'appareil (8) électronique de commande d'anti-enrayage en une unité (38) de construction, dans lequel
b) le dispositif (36) de contrôle de châssis et le dispositif (1) d'anti-enrayage ont une alimentation (41) commune en courant et une interface (42) commune pour la communication avec une personne de service et une interface (44) commune pour la communication avec un système de conduite de véhicule, et dans lequel
c) le capteur d'anti-enrayage est un capteur (10) en combinaison, qui envoie, outre le signal pour la vitesse de rotation d'au moins une roue ou d'un essieu, un signal pour la température d'une boîte (18) d'essieu et un signal de vibration pour des vibrations régnant sur la boîte (18) d'essieu à l'appareil (34) de commande de contrôle de châssis, pour tirer parti des signaux de vitesse de rotation, de température et d'accélération du capteur (10) en combinaison en plus comme données de diagnostic pour détecter précocement des éléments constitutifs défectueux ou des tronçons défectueux des rails.

2. Dispositif de commande suivant la revendication 1, **caractérisé en ce qu'**un boîtier de l'appareil électronique de commande de contrôle de châssis et un boîtier de l'appareil électronique de commande d'anti-enrayage sont bridés l'un contre l'autre.

3. Dispositif de commande suivant la revendication 1, **caractérisé en ce qu'**au moins une partie de l'appareil (34) électronique de commande de contrôle de châssis et de l'appareil (8) électronique de commande d'anti-enrayage sont logées dans un boîtier (40) commun.

4. Dispositif de commande d'un véhicule (2) ferroviaire ayant un dispositif de contrôle de roulement, comprenant un appareil de commande de contrôle de roulement et au moins un capteur (10) de contrôle de roulement pour la détection de la vitesse de rotation d'au moins l'une des roues sous la forme d'un signal de vitesse de rotation, ainsi qu'ayant un dispositif (36) de contrôle de châssis pour le contrôle et/ou pour le diagnostic du châssis, en ce qui concerne des états critiques et des dommages, comme, par exemple, le dégivrage, des paliers grippés, une marche instable et analogue, comprenant un appareil (34) électronique de commande de contrôle de châssis, **caractérisé en ce que**
a) l'appareil (34) électronique de commande de contrôle de châssis est rassemblé avec l'appareil (8) électronique de commande de contrôle de roulement en une unité (38) de construction, dans lequel
b) le dispositif (36) de contrôle de châssis et le dispositif de contrôle de roulement ont une alimentation (41) commune en courant et une interface (42) commune pour la communication avec une personne de service et une interface (44) commune pour la communication avec un système de conduite de véhicule, et dans lequel
c) le capteur de contrôle de roulement est un capteur (10) en combinaison de contrôle de roulement, qui envoie, outre le signal pour la vitesse de rotation d'au moins une roue ou d'un essieu, un signal pour la température d'une boîte (18) d'essieu et un signal de vibration pour des vibrations régnant sur la boîte (18) d'essieu à l'appareil (34) de commande de contrôle de châssis pour tirer parti des signaux de vitesse de rotation, de température et d'accélération du capteur (10) de contrôle de roulement en plus comme données de diagnostic pour détecter précocement des éléments constitutifs défectueux ou des tronçons défectueux des rails.

5. Dispositif de commande suivant la revendication 4, **caractérisé en ce qu'**un boîtier de l'appareil électronique de commande de contrôle de châssis et un boîtier de l'appareil électronique de commande de contrôle de roulement sont bridés l'un contre l'autre.

6. Dispositif de commande suivant la revendication 4, **caractérisé en ce qu'**au moins une partie de l'appareil (34) électronique de commande de contrôle de châssis et de l'appareil (8) électronique de commande de contrôle de roulement sont logés dans un boîtier (40) commun.

7. Dispositif de commande suivant l'une des revendications précédentes, **caractérisé en ce que** le capteur (10) en combinaison est monté directement sur la boîte (18) d'essieu ou à proximité immédiate de la boîte (18) d'essieu.

8. Dispositif de commande suivant l'une des revendications précédentes, **caractérisé en ce que** l'appareil (34) de commande de contrôle de châssis exploite le signal de vitesse de rotation du capteur (10) de contrôle de roulement et/ou du capteur (10) d'anti-enrayage.

9. Dispositif de commande suivant l'une des revendications précédentes, **caractérisé en ce que** l'interface (40) commune pour la communication avec un système de conduite de véhicule est raccordée à un bus (46) de véhicule.

10. Dispositif de commande suivant la revendication 9, **caractérisé en ce que** le système de conduite de véhicule comporte un dispositif d'affichage pour l'indication d'états critiques que le dispositif (38) de contrôle de châssis a détecté.

11. Véhicule ferroviaire comprenant un dispositif de commande suivant au moins l'une des revendications précédentes.
